Europäisches Patentamt

European Patent Office

Office européen des brevets

(11) Veröffentlichungsnummer: **0 081 671**
A2

# (12) EUROPÄISCHE PATENTANMELDUNG

(21) Anmeldenummer: 82110236.5

(51) Int. Cl.³: **B 29 F 1/10**

(22) Anmeldetag: 06.11.82

(30) Priorität: 15.12.81 DE 3149599

(71) Anmelder: Rehau Plastiks AG + Co, Rheniumhaus, D-8673 Rehau (DE)

(43) Veröffentlichungstag der Anmeldung: 22.06.83 Patentblatt 83/25

(84) Benannte Vertragsstaaten: FR GB IT SE

(72) Erfinder: Die Erfinder haben auf ihre Nennung verzichtet

(54) Vorrichtung zum Umspritzen der umlaufenden Schnittkanten von Platten aus Holzwerkstoff.

(57) Die Erfindung betrifft eine Vorrichtung zum Umspritzen der umlaufenden Kanten von Platten aus Holzwerkstoff. Hierbei wird eine mehrteilige Spritzform mit einer oberen und einer unteren Formplatte verwendet, welche einen umlaufenden Aufnahmeraum für die Schnittkanten der Platten bilden. Dieser Aufnahmeraum wird durch einen in die untere Formplatte eingelassenen Formeinsatz seitlich begrenzt, in dessen Anschluss in der unteren Formplatte eine zum Aufnahmeraum hin verschieblich gelagerte Gegendruckplatte angeordnet ist, welche mit ihren zugeordneten Oberflächen die untere Begrenzung des Aufnahmeraumes und die seitliche Begrenzung zum Formeinsatz bildet.

## Vorrichtung zum Umspritzen der umlaufenden Schnittkanten
## von Platten aus Holzwerkstoff

Die Erfindung betrifft eine Vorrichtung zum Umspritzen der umlaufenden Schnittkanten von Platten aus Holzwerkstoffen, insbesondere von Spanplatten mit einem thermoplastischen Kunststoff, bestehend aus einer mehrteiligen Spritzform mit einer oberen und einer unteren Formplatte, die zwischen sich den umlaufenden Aufnahmeraum für die Schnittkanten der Platte und den Freiraum für den Kunststoff bilden.

Aus der Österreichischen Patentschrift 253 765 ist eine Gießform zum Beschichten der Schmalseiten eines plattenförmigen Gegenstandes bekannt, bei welchem dieser Gegenstand derart in einen Formkasten eingebracht wird, daß er auf einem zurückversetzten Rahmen aus Schwamm- oder Moosgummibändern aufliegt. Der Innenraum dieses von dem Gegenstand abgedeckten Rahmens wird durch eine entsprechende Leitung evakuiert und damit der Gegenstand fest auf die Unterlage der Gießform gedrückt. Zwischen den Außenkanten des Gegenstandes und einem umlaufenden Formrahmen, der auf der Unterlage befestigt ist, befindet sich ein umlaufender Spalt, der zur Beschichtung der Kanten des Gegenstandes mit Kunststoff, z.B. Gießharz, gefüllt werden kann. Wenn als Gegenstand eine Spanplatte benutzt wird, wird in dieser Vorveröffentlichung der besondere Vorteil darin gesehen, daß das Vakuum durch die Poren der Spanplatte hindurch auf das eingebrachte flüssige Kunstharz wirkt und dieses in die stirnseitigen Poren der Spanplatte einsaugt. Auf diese Weise soll eine besonders gut wirkende Haftung der Kunststoffbeschichtung an den Schmalseiten der Spanplatte erzielt werden.

Die bekannte Vorrichtung ist aufwendig, insbesondere durch die Verwendung des Vakuums, und kann darüberhinaus nicht verhindern, daß Teilbereiche des Beschichtungskunststoffes an den Kanten auf die Oberfläche des beschichteten Gegenstandes geraten, was zwangsläufig zu einer kostenintensiven Nacharbeit führen muß.

- 2 -

Aus der Schweizerischen Patentschrift 548 835 ist ein Verfahren zum Angießen einer Umrandung aus Kunststoff an eine Möbelplatte bekannt, bei dem diese Möbelplatte in einen zweiteiligen Formkasten eingebracht wird, der zu den Stirnseiten der Möbelplatte einen Freiraum läßt, welcher anschließend mit einem gießfähigen Kunststoff ausgefüllt wird. Das wesentliche Merkmal dieses Verfahrens ist, daß die Möbelplatte an ihren Stirnseiten federnd elastisch gemacht wird. Diese Elastizität wird benötigt, um die auftretenden Dicken-Toleranzen solcher Möbelplatten zu überwinden.

Die Elastizität der Möbelplatte in den Stirnflächenbereichen wird dadurch erzielt, daß entweder die Deckschicht an den Kanten der Möbelplatte entfernt wird, oder aber im Bereich der Möbelplattenkante in die Kernschicht eine oder mehrere parallel zu den Deckschichten verlaufende Schlitze oder Nuten eingearbeitet werden. In diesen zusätzlichen Bearbeitungen liegt der Nachteil des bekannten Verfahrens, da die Abarbeitung von Deckschichten bzw. die Einarbeitung von Schlitzen kostenintensiv und zeitaufwendig ist.

Aus der Deutschen Offenlegungsschrift 27 19 128 ist ein weiteres Verfahren zum Anbringen einer Kunststoff-Umrandung als Kantenschutz für die Schnittflächen von Platten bekannt, bei welchem ein thermoplastischer Kunststoff unmittelbar auf die Schnittflächen der Platten aufgebracht wird. Die in dieser Vorveröffentlichung beschriebene Vorrichtung besteht aus einem zweiteiligen Spritzwerkzeug, in dessen Randbereichen Dichtleisten eingelassen sind, welche die Stege der Kunststoff-Umrandung auf der Plattenober- bzw. -unterfläche begrenzen. Diese Dichtleisten bestehen aus Polytetrafluoräthylen und sind dementsprechend bei Dauerbenutzung einem Verschleiß unterworfen.

Schließlich ist aus der Deutschen Offenlegungsschrift 30 02 452 noch eine Platte aus Holzwerkstoff bekannt, bei welcher zwecks besserer Haftung des auf die Schnittflächen aufgespritzten Kunststoffmaterials diese Schnittflächen eine entsprechende Profilierung aufweisen. Der Nachteil dieser Plattenkanten-Profilierung liegt in der aufwendigen Bearbeitung.

Die Erfindung hat sich demgegenüber die Aufgabe gestellt, die Nachteile des bekannten Standes der Technik zu vermeiden und eine Vorrichtung zum Umspritzen der Schnittkanten von Holzstoffplatten anzugeben, in der keine Verschleißteile angeordnet sind und mit der Plattenumspritzungen verschiedener Profilierungen durchgeführt werden können. Erfindungsgemäß wird dazu vorgeschlagen, daß der Freiraum neben der Schnittkante und der oberen Formplatte durch einen in die untere Formplatte eingelassenen Formeinsatz begrenzt ist und daß im Anschluß an den Formeinsatz in die untere Formplatte eine federgelagerte Gegendruckplatte eingelassen ist, welche zum Aufnahmeraum hin verschieblich gelagert ist und mit ihrer Oberfläche die untere Begrenzung des Aufnahmeraumes und die seitliche Begrenzung für den Formeinsatz bildet.

Es hat sich hierbei als vorteilhaft erwiesen, daß der Formeinsatz einen Fortsatz aufweist, welcher zur Herstellung einer gewünschten Profilierung in den Freiraum hineinragt. Ferner erscheint es zweckmäßig, daß in die untere Formplatte im Durchmesser abgestufte Bohrungen eingebracht sind, durch welche je ein Führungsbolzen greift, an dessen Schaft im unteren Teilbereich eine Feder angebracht ist, welche sich mit ihrem oberen Ende auf der Oberfläche der Gegendruckplatte und mit ihrem unteren Ende an der Schulter der Bohrung abstützt. Ferner ist es zweckmäßig, daß der Führungsbolzen mit der Gegendruckplatte verbunden ist und mit seinem Kopfbereich in eine Bohrung der unteren Formplatte eingreift. Die federgelagerte Gegendruckplatte nach der Erfindung bildet einen umlaufenden Rahmen, z.B. aus zusammengesetzten Leisten, welcher in das Formwerkzeug eingebaut ist. Dieser umlaufende Rahmen bewirkt beim Schließen der Vorrichtung bei eingelegter Spanplatte ein Auffangen der Dicken-Toleranzen dieser Platte. Die Gegendruckplatte ist umlaufend durch mehrere Führungsbolzen in der unteren Formplatte gelagert und ist somit in der Lage, unterschiedliche Toleranzen der Spanplatte beim Schließen der Form aufzunehmen. Neben der Gegendruckplatte ist als weiteres Merkmal der Erfindung der in die untere Formplatte eingelassene Formeinsatz zu sehen. Dieser Formeinsatz kann so gestaltet werden, daß er eine flächige und geradlinige Umspritzung der Plattenkante ermöglicht, während er andererseits auch zur Bildung eines umlaufenden Randes ausgebildet sein kann derart, daß in den Freiraum ein Teil des Formeinsatzes hineinragt und daß gerade dieser Teil die Hinterschneidung bewirkt.

Der besondere Vorteil der Erfindung wird in der variabel beweglichen Gegendruckplatte zur Aufnahme der Dickenunterschiede der Spanplatte und darüberhinaus in der Möglichkeit gesehen, die Spanplattenenden mit beliebigen Umspritzungen zu versehen, wobei auch umlaufende Ränder möglich sind. Wesentlich bei der Beurteilung der Gesamtanordnung ist, daß durch die Gegendruckplatte bei der Schließung der Gesamtform der Freiraum für den Kunststoff nach oben hin durch die obere Formplatte planeben abgeschlossen ist. Dies wird durch den Schließdruck der Form in Kombination mit dem Gegendruck der Gegendruckplatte erreicht. Auf diese Weise wird verhindert, daß Schwimmhäute auf der Oberseite der Spanplatte austreten.

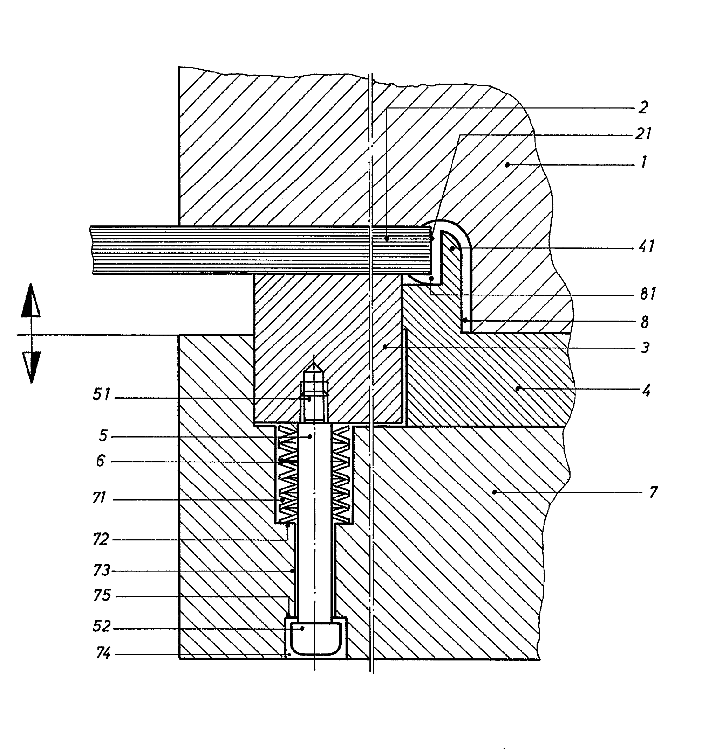

In der Zeichnung ist ein Teilschnitt der erfindungsgemäßen Vorrichtung schematisch dargestellt. Die Vorrichtung ist in geschlossener Form gezeigt, wobei die obere Formplatte (1) im Randbereich der Spanplatte (2) auf dem Formeinsatz (4) der unteren Formplatte (7) aufliegt. Der federnde Einsatz (3) preßt die Spanplatte von unten gegen die obere Formplatte (1). Der Formeinsatz (4) ragt in der gezeigten Ausführungsform in den Freiraum (8) für den Kunststoff hinein. Der Fortsatz (41) des Formeinsatzes (4) bewirkt in der gezeigten Darstellung die Bildung eines umlaufenden Randes in der Kunststoffabdeckung des Plattenrandes. Der Anspritzpunkt für den Kunststoff ist in der Zeichnung nicht dargestellt. Seine Anordnung richtet sich nach bekannten, werkzeugtechnischen Erfordernissen. Der Formeinsatz (4) ist im Bereich der unteren Plattenkante derart gestaltet, daß der Freiraum (8) für den Kunststoff in Form einer Umlenkung (81) unter den unteren Plattenrand greift. Auch über die obere Plattenkante kann - wie gezeigt - durch eine Erweiterung des Freiraumes (8) über den oberen Plattenrand hinaus eine Übergreifungen des Plattenrandes erfolgen. Diese oberen und unteren Übergreifungen des Plattenrandes verhindern die Entstehung von Schmutzfugen bei der fertig umspritzten Spanplatte. In der unteren Formplatte (7) ist eine abgestufte Bohrung eingebracht, in welche der Führungsbolzen eingreift. Der Führungsbolzen (5) besitzt am unteren Teilbereich seines Schaftes eine Feder (6) und ist mit einem Gewindeteil (51) in einer entsprechenden Gewindeöffnung der Gegendruckplatte (3) befestigt. Die Feder (6) stützt sich einerseits auf der Oberfläche der Gegendruckplatte (3) und andererseits an der Schulter (72) der abgestuften Bohrung (71) ab. Die abgestufte Bohrung (71) besitzt in ihrem oberen Bereich einen Führungsteil (73) für den oberen Schaftteil des Führungsbolzens (5). Der Führungsbolzen (5) sitzt mit seinem Kopfteil (52) in einer vergrößerten Öffnung (74) der unteren Formplatte (7) und stützt sich an der Schulter (75) der abgestuften Bohrung (71) ab.

Patentansprüche

PATENTANSPRÜCHE

1. Vorrichtung zum Umspritzen der umlaufenden Schnittkanten von Platten aus Holzwerkstoff, insbesondere von Spanplatten, mit einem thermoplastischen Kunststoff, bestehend aus einer mehrteiligen Spritzform mit einer oberen und unteren Formplatte, die zwischen sich den umlaufenden Aufnahmeraum für die Schnittkanten der Spanplatten und den Freiraum für den Kunststoff bilden, dadurch gekennzeichnet, daß der Freiraum (8) neben der Schnittkante (21) und der oberen Formplatte (1) durch einen in die untere Formplatte (7) eingelassenen Formeinsatz (4) begrenzt ist, und daß im Anschluß an den Formeinsatz (4) in die untere Formplatte (7) eine umlaufende Gegendruckplatte (3) eingelassen ist, welche zum Aufnahmeraum (9) für die Spanplatte (2) hin verschieblich gelagert ist und mit ihren zugeordneten Oberflächen die untere Begrenzung des Aufnahmeraumes (9) und die seitliche Begrenzung für den Formeinsatz (4) bildet.

2. Vorrichtung nach Anspruch 1, dadurch gekennzeichnet, daß der Formeinsatz (4) einen Fortsatz (41) aufweist, welcher in den Freiraum (8) hineinragt.

3. Vorrichtung nach Anspruch 1, dadurch gekennzeichnet, daß in die untere Formplatte (7) im Durchmesser abgestufte Bohrungen (71) eingebracht sind, durch welche je ein Führungsbolzen (5) greift, an dessen Schaft im unteren Teilbereich eine Feder (6) angeordnet ist, welche sich mit ihrem oberen Ende auf der Oberfläche der Gegendruckplatte (3) und mit ihrem unteren Ende an der Schulter (72) der Bohrung (71) abstützt.

4. Vorrichtung nach Anspruch 3, dadurch gekennzeichnet, daß der Führungsbolzen (5) mit der Gegendruckplatte (3) verbunden ist und mit seinem Kopfbereich (52) in eine vergrößerte Öffnung (74) der unteren Formplatte (7) eingreift.